(19) Europäisches Patentamt
European Patent Office
Office européen des brevets

(11) Publication number: 0 099 432
B1

(12) **EUROPEAN PATENT SPECIFICATION**

(45) Date of publication of patent specification: **07.01.87**

(51) Int. Cl.$^4$: **B 01 D 13/04,** B 01 D 53/22, C 08 G 77/52

(21) Application number: **82303815.3**

(22) Date of filing: **21.07.82**

(54) **Permselective membrane.**

(43) Date of publication of application:
**01.02.84 Bulletin 84/05**

(45) Publication of the grant of the patent:
**07.01.87 Bulletin 87/02**

(84) Designated Contracting States:
**DE FR GB IT NL**

(56) References cited:
**GB-A-2 011 804**
**GB-A-2 012 297**
**US-A-3 202 634**
**US-A-3 767 737**

(73) Proprietor: **TORAY INDUSTRIES, INC.**
**2, Nihonbashi-Muromachi 2-chome Chuo-ku**
**Tokyo 103 (JP)**

(72) Inventor: **Hirose, Masakazu**
**15B1-32, Sonoyama 2-chome**
**Otsu-shi Shiga-ken (JP)**

(74) Representative: **Coxon, Philip et al**
**Eric Potter & Clarkson 14 Oxford Street**
**Nottingham NG1 5BP (GB)**

**EP 0 099 432 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a permselective membrane for use in the separation of a gas mixture. More particularly, the present invention relates to a composite membrane comprising a porous support and a film of a silicon-containing polymer having a specific structure, laminated on the porous substrate, which is especially effective for obtaining oxygen-rich air from air. More specifically, the present invention relates to a gas permselective membrane comprising a gas-separating active layer having a thickness not larger than 1 μm, which layer is uniformly laminated on a porous support membrane, and being excellent in respect to pressure resistance and resistance to pinhole formation.

In an ordinary combustion system (for example, a boiler), air is used in addition to fuel. If oxygen-rich air having an increased oxygen concentration is fed to the combustion system instead of air, the fuel efficiency and combustion temperature can be elevated and the amount of a combustion exhaust gas can be reduced, thereby saving energy and preventing environmental pollution.

As a method for separating oxygen from air, the cryogenic separation method has been carried out on an industrial and commercial scale. However, the cost of the production of oxygen-rich air according to this separation method is high, and if oxygen obtained according to this method is utilized for a combustion system, no substantial energy-saving effect can be attained.

As an oxygen-separating method having a lower oxygen production cost than that of the cryogenic separation method, there can be mentioned the pressure swing adsorption method using a zeolite-type adsorbent. Indeed, the oxgyen production cost of this method is lower than that of the cryogenic separation method. However, the cost is still high when oxygen obtained according to this method is utilized for a combustion furnace such as a heating furnace or a boiler.

When a process for concentrating oxygen in air by using a separating membrane is utilized in the production of oxygen-rich air, since no phase change occurs at the time of separation, it is expected that oxygen-rich air can be obtained at a lower cost than in the conventional techniques.

Various permselective membranes for gas mixtures, especially gas permselective membranes for concentrating oxygen in air, have heretofore been proposed. For example, GB—A—2,011,804 proposes a composite membrane comprising a thin film of a cross-linked silicone rubber laminated on a porous support. This composite membrane, however, is defective in various respects. For example, if the silicone rubber film is an ultra-thin film having a thickness of about 0.05 to about 0.5 μm, the mechanical strength is insufficient, and, therefore, if the silicone rubber film is coated on a porous substrate to form a composite membrane, pinholes are readily formed. Furthermore, if the gas-separating operation is continuously carried out by using this composite membrane, the membrane is broken or is caused to fall down into empty pores because of a transmembrane pressure difference present throughout the membrane, and the reliability of the separating capability of the membrane is poor. Moreover, in this composite membrane, since the active layer participating in the gas-separating action is composed of a cross-linked silicone rubber, the level of the oxgyen permselectivity is inevitably the same as the level of a silicone rubber film. More specifically, in the case where the value of the separation factor $\alpha[\alpha = \rho O_2/\rho N_2$, in which $\rho O_2$ and $\rho N_2$ stand for the oxygen gas permeability and the nitrogen gas permeability of the membrane material and the unit is $m^3$(STP) $m/m^2 \cdot s.Pa]$, is as small as about 2.2, the driving energy for the separating operation provided by a compressor or vacuum pump, is used for permeation of the nitrogen gas, which is inherently unnecessary, through the membrane, and, therefore, the energy cost required for the separating operation is increased as compared with the energy cost required when a membrane of a material having a higher separation factor (for example, a membrane material of $\alpha = 3$) is used. Accordingly, the use of a membrane having such a low separation factor is not preferred from an economical viewpoint. Furthermore, when a membrane having a separation factor of 2.2 is used, it is impossible to obtain oxygen-rich air having an oxygen concentration higher than 40% by one-stage separation.

US—A—3,767,737 discloses a composite membrane formed by laminating on a porous substrate a thin film obtained by spreading a dilute organic solvent solution of a polysiloxane-polycarbonate block copolymer on the water surface. However, since the separation factor $\rho O_2/\rho N_2$ of the polysiloxane-polycarbonate block copolymer as the membrane material is 2, even if this composite membrane is used, it is impossible to obtain oxygen-rich air having an oxygen concentration higher than 40% from air by the ordinary membrane separation method.

As will be apparent from the foregoing description, when oxygen-rich air is obtained from air by using the above-mentioned gas permselective membrane comprising a thin layer of a silicone rubber, the driving energy required for the separating operation exceeds the economically allowable level, and an economical gas separation plant cannot be constructed by using the above-mentioned gas permselective membrane.

It is a primary object of the present invention to provide a permselective membrane in which the foregoing defects of the conventional techniques are eliminated, which comprises a gas-separating active layer having a thickness of not more than 1 μm, which layer is uniformly laminated on a porous support, and which is excellent in respect to pressure resistance and resistance to pinhole formation.

Another object of the present invention is to provide a gas-separating membrane having a high oxygen-separating capacity and being excellent in respect to pressure resistance and resistance to pinhole formation.

More specifically, in accordance with the present invention, there is provided a gas permselective

membrane comprising a porous support having fine pores continuous in the thickness direction and a 0.01 to 1 µm thick layer of a siloxane containing polymer laminated on the surface of said porous support, characterized in that said polymer comprises silarylene-siloxane structural units represented by the following general formula

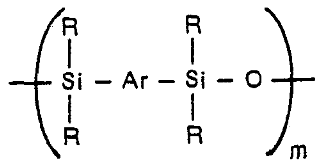

wherein R stands for an alkyl group having 1 to 10 carbon atoms, a phenyl group , a nucleus-substituted phenyl group having 6 to 20 carbon atoms, or a substituted alkyl group having 1 to 10 carbon atoms, Ar stands for

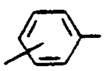 , 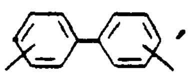 , 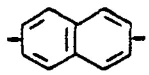 or 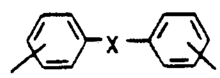

in which X is —O—, —S—, —$SO_2$—,

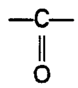

or —$CH_2$—, and m is a number of from 5 to 8000, and diorganosiloxane structural units represented by the following general formula

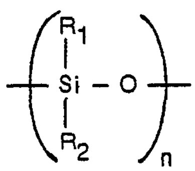

wherein $R_1$ and $R_2$ each independently stand for an alkyl group having 1 to 10 carbon atoms, a phenyl group, a nucleus-substituted phenyl group having 6 to 20 carbon atoms, a substituted alkyl group having 1 to 10 carbon atoms, a vinyl group, or an allyl group, and n is a number of from 0 to 2000, with the proviso that n/m is in the range of $0 \leqq n/m \leqq 50$, and the average pore size of said porous support is 0.001 to 1 µm.

The polymer layer of the permselective membrane of the present invention is composed of a polymer comprising silarylene-siloxane structural units represented by the following general formula

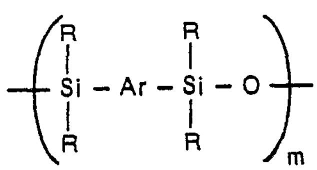

wherein R stands for an alkyl group having 1 to 10 carbon atoms, a phenyl group, a nucleus-substituted phenyl group having 6 to 20 carbon atoms, or a substituted alkyl group having 1 to 10 carbon atoms, and Ar stands for

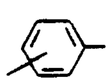 , 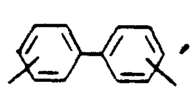 , 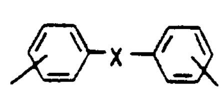 ,

in which X is —O—, —S—, —$SO_2$—,

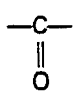

or —$CH_2$, or

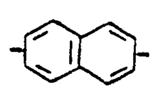

and diorganosiloxane structural units represented by the following general formula

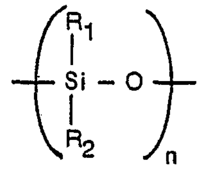

wherein $R_1$ and $R_2$ each independently stand for an alkyl group having 1 to 10 carbon atoms, a phenyl group, a nucleus-substituted phenyl group having 6 to 20 carbon atoms, inclusive of a benzyl group, a substituted alkyl group having 1 to 10 carbon atoms, such as a halogenoalkyl group, a cyanoalkyl group, an aminoalkyl group, a nitroalkyl group, a hydroxyalkyl group, an alkoxyalkyl group, a carboxyalkyl group, or a mercaptoalkyl group, a vinyl group, or an allyl group.

In the above-mentioned polymer, the sequence lengths m and n are numbers satisfying the requirements of $5 \leqq m \leqq 8000$, $0 \leqq n \leqq 2000$, and $0 \leqq n/m \leqq 50$, preferably the requirements of $5 \leqq m \leqq 1000$, $1 \leqq n \leqq 2000$ and $1/100 \leqq n/m \leqq 50$ or $50 \leqq m \leqq 8000$ and $n = 0$, especially preferably the requirement of $5 \leqq m \leqq 500$, $1 \leqq n \leqq 500$, and $1/100 \leqq n/m \leqq 20$.

If the n/m value exceeds 50, the strength of the polymer film is reduced, and in the case of an ultra-thin film, the pressure resistance and the resistance to pinhole formation are degraded an no good results can be obtained.

Silarylene-siloxane structural units of the above general formula in which R is

$-CH_3$ , $-C_2H_5-$, $-C_3H_7$ , $-CH_2Cl$,

$-CH{=}CH_2$ , 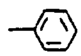 , 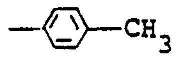 or 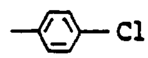, and Ar is 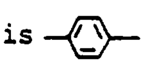

are preferred, and those in which R is $-CH_3$ and Ar is

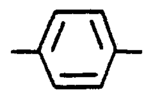

are especially preferred.

In the diorganosiloxane units represented by the following general formula

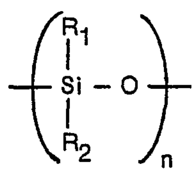

$R_1$ and $R_2$ each may be a substituent selected from alkyl groups having 1 to 10 carbon atoms, a phenyl group, substituted alkyl groups having 1 to 10 carbon atoms, and nucleus-substituted phenyl groups having 6 to 20 carbon atoms. The preferred structural units are as follows.

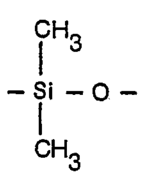 , 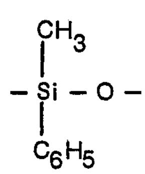 , 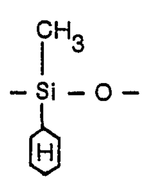 ,

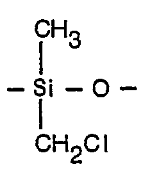 , 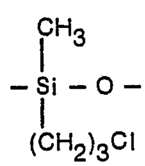 ,

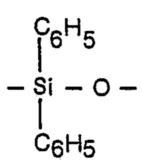 , 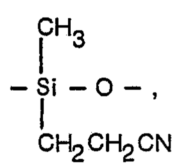 , 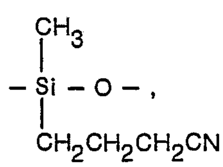 ,

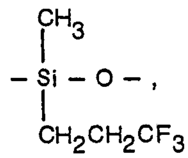, 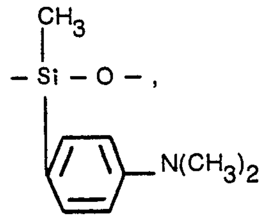,

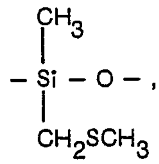,

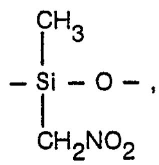, 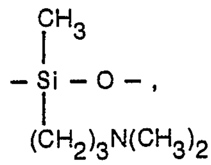,

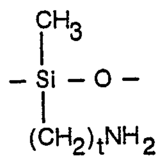 (t is 1, 2, or 3)

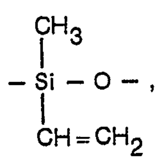, 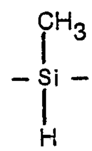 and 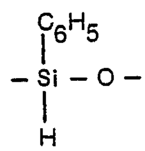 .

As the polymer that is especially preferably used in the present invention, there can be mentioned silphenylene-siloxane alternating random block copolymers having the following recurring units

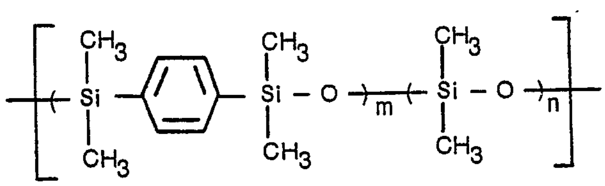 or

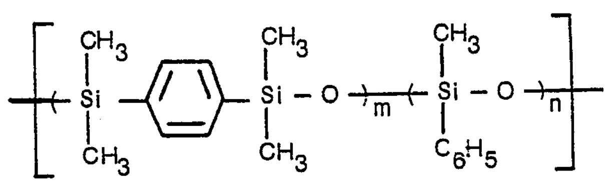

and polysilphenylene-siloxanes having the following recurring units

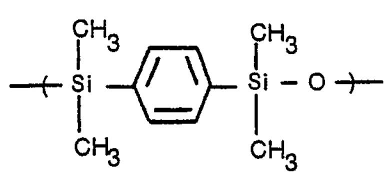

Structural units other than the above-mentioned silarylene-siloxane units and diorganosiloxane units may be incorporated in an amount of up to 40% by weight into the polymer used in the present invention by copolymerization or blending as long as the gas permeability and mechanical properties (such as pressure resistance and resistance to pinhole formation) of the ultra-thin film layer and adhesion of the ultra-thin film layer to the porous support are not degraded. For example, the following units are preferably incorporated

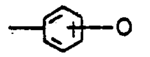, 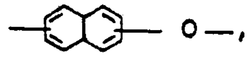,

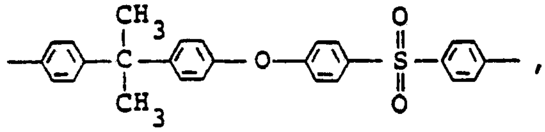,

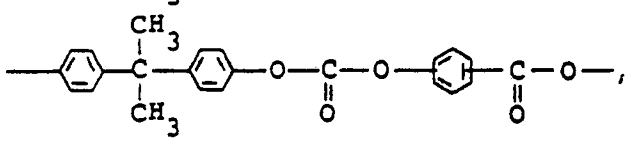,

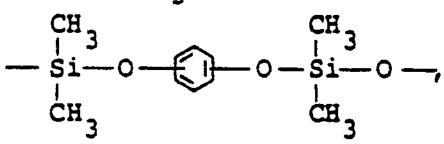,

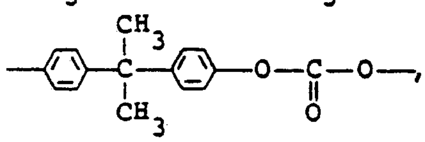,

$-CH_2CH_2O-$, 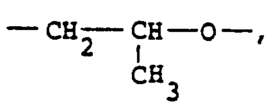,

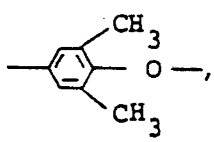, 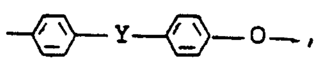,

(Y is 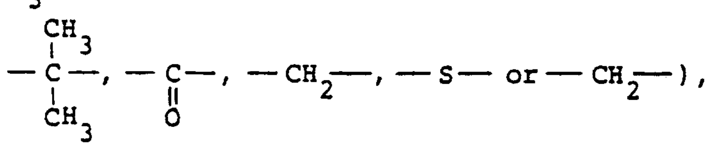 or ),

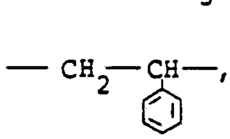, 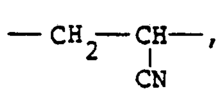, 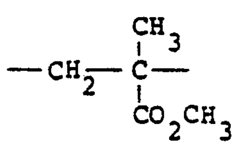,

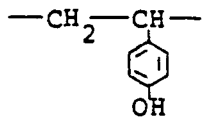 and 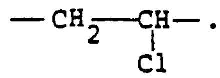.

These silarylene-type polymers may be prepared according to known processes, and the preparation process is not particularly critical. For example, these polymers may be prepared acording to a process disclosed in the Journal of Polymer Science, Part A, Volume 12, pages 15—29 (1964) and US—A—3,202,634.

Any porous molded articles can be used as the porous support in the present invention. It is preferred to use a porous support having an air-permeable structure in which the pore size of fine pores on one surface is 0.001 to 1 μm, especially 0.005 to 0.1 μm. For example, there are preferably used microporous membranes composed of polypropylene, polyethylene, polysulfone, polyether sulfone, cellulose acetate, ethyl cellulose, polyvinyl chloride, or polytetrafluoroethylene. Microporous membranes composed of polysulfone, polyether sulfone, or cellulose acetate are especially preferred.

If the pore size of the fine pores on the surface of the porous support is less than 0.001 μm, the gas transmission rate of the composite membrane is reduced an no good results can be obtained.

On the other hand, if the pore size of the fine pores on the surface of the porous substrate exceeds 1 μm, since the gas-separating ultra-thin film layer is caused to fall into empty pores on the surface of the porous support at the gas-separating operation, pinholes are formed on the ultra-thin film, and when the gas-separating operation is continuously carried out, the gas permeation rate is reduced with the lapse of time.

It is preferred that the pore size of the fine pores on the surface of the porous support be smaller than the thickness d of the ultra-thin film to be laminated on the porous support, especially smaller than one half of the thickness d. If the pore size exceeds the thickness d, the membrane is readily deformed by the transmembrane pressure difference at the gas-separating operation, and when the gas-separating operation is continuously carried out for a long time, the gas permeation rate is reduced with the lapse of time and pinholes are often formed. The porous support is not limited to a plane porous support as described above, and a porous hollow fiber or the like may be used.

Lamination of the polymer layer of the present invention on the porous support may be accomplished by dissolving the polymer in an appropriate solvent such as benzene, cyclohexane, n-hexane, n-heptane, iso-pentane, toluene, xylene, chloroform, methylene chloride, carbon tetrachloride, dichloroethane, or a mixture thereof to form a dilute solution and by coating the dilute solution on the porous substrate. The polymer concentration in the polymer so lution may be 0.2% to 20% by weight, preferably 0.5% to 5% by weight.

It is preferred that the thickness of the laminated film be larger than the pore size of the porous support. More specifically, the thickness of the laminated film is 0.01 to 1 μm, preferably 0.05 to 0.7 μm and especially preferably 0.1 to 0.5 μm.

Coating of the polymer solution in an organic solvent on the porous support is preferably accomplished by using an ordinary coater. It is preferred that a gravure roll coater, a slit die coater, a kiss coater, a fountain coater, a curtain coater, or a dip coater be used for the coating operation.

The coating operation is advantageously carried out at a temperature which is approximately room temperature. However, the coating operation may be carried out at a slightly elevated or reduced temperature as long as no particular disadvantage is brought about.

The porous substrate coated with the polymer solution in an organic solvent is ordinarily dried in an ordinary hot-air circulation oven at 50°C to 200°C for 10 seconds to 10 minutes. Air drying or preliminary drying at a temperature slightly lower than the predetermined drying temperature may be carried out before the drying operation.

The thickness of the ultra-thin film prepared according to the above-mentioned film-forming method is determined substantially directly by the concentration of the polymer solution coated and the amount of the polymer supplied to the unit area of the porous support. The coating conditions are set so that the thickness of the ultra-thin film after drying is 0.01 to 1 μm, especially 0.05 to 0.7 μm.

As will be apparent from the foregoing description, according to the present invention, an ultra-thin film layer of a silicon polymer of a specific structure having a high oxygen-gas permeability and a high mechanical strength is uniformly laminated on a porous support to form a gas permselective membrane. This gas-separating composite membrane of the present invention has the following excellent characteristic properties:

(1) Since the oxygen gas permselectivity is very high, oxygen-rich air having a high oxygen concentration can be obtained at a high efficiency by a one-stage separating operation when the permselective membrane of the present invention is used.

(2) Even if the gas-separating operation is continuously carried out for a long time, such disadvantages as the formation of pinholes due to the transmembrane pressure difference present throughout the membrane, resulting in a reduction of the gas-separating capacity, and sinking of the ultra-thin film layer into the pores on the porous support, resulting in a reduction of the gas transmission rate, are not presented.

(3) Even if the gas-separating operation is carried out for a long time, a reduction of a gas-separating capacity due to breakage of the ultra-thin film layer as a result of dust in the air is not caused at all.

The present invention will now be described in detail with reference to the following Examples that by no means limit the scope of the invention.

## Example 1

1,4-bis(hydroxydimethylsilyl)benzene (having a melting point of 135°C) having the following formula

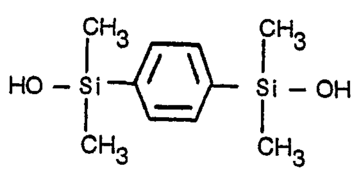

(A)

was synthesized by the Grignard coupling reaction of dimethyldichlorosilane with p-bromobenzene in tetrahydrofuran. In a nitrogen stream, 0.5 parts by weight of a salt of 2-ethylhexanoic acid with n-hexylamine and 100 parts by weight of the compound (A) were stirred under atmospheric pressure for 3 hours. The reaction vessel was evacuated to 66 Pa and the reaction mixture was stirred at 200°C for 4 hours to complete polymerization. After the completion of polymerization, the formed polymer was dissolved in benzene and the solution was thrown into a large amount of methanol to precipitate the polymer. The polymer was collected and dissolved in benzene to form a solution having a polymer concentration of 0.5% by weight. The solution was coated on a "Millipore Filter VSWP" (a cellulose acetate porous membrane having an average pore size of 0.025 μm; supplied by Millipore Corp.). When the cross section of the ultra-thin film was observed by means of an electron microscope, it was found that the thickness of the coated layer was 0.25 μm. The gas permeation rates of the obtained composite membrane were measured at 25°C by using a gas permeation rate measuring apparatus (Model GTR—10 supplied by Yanagimoto Seisakusho) provided with a gas chromatographic detector. It was found that the oxygen gas permeability was $3.10^{-10}$ $m^3/m^2 \cdot s \cdot Pa$, the permeability per centimeter of the thickness of the coated layer was $7.5 \cdot 10^{-17}$ $m^3/m^2 \cdot s \cdot Pa$, and the separation factor ($\rho O_2/\rho N_2$) was 4.0.

Example 2

A porous membrane ("Millipore Filter VSWP"; average pore size, 0.025 μm; diameter, 90 mm) was immersed in methanol for 30 minutes and then immersed in water for 10 minutes. The surface of the so-treated filter was coated with a uniform water layer.

In 100 parts by weight of cyclohexane was dissolved 10 parts by weight of a silphenylene-siloxane alternating random block copolymer having the following recurring units

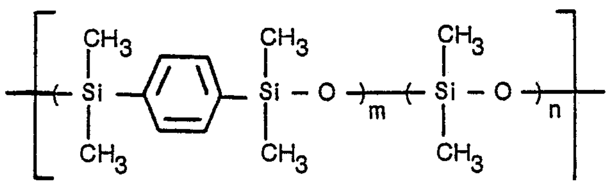

(n = 380, n/m = 3, [η] = 2.0 in toluene) to form a homogeneous solution. Then isopentane was added to the solution so that the polymer concentration in the solution was 0.5% (wt/wt).

The polymer solution was cast on the above porous membrane with the porous membrane being kept horizontal. Then the porous membrane was vertically erected so that the unnecessary solution flowed down. Next, the coated porous membrane was air-dried and dried in a hot-air circulation oven at 70°C. In the obtained composite membrane, the thickness of the layer of the silphenylene-siloxane block copolymer was 0.064 μm. The gas permeation rates of the composite membrane were determined at 25°C by using the aforementioned gas permeation rate measuring apparatus provided with a gas chromatographic detector. If was found that the oxygen gas permeability was $3.5 \cdot 10^{-9}$ $m^3/m^2 \cdot s \cdot Pa$ and the separation factor ($\rho O_2/\rho N_2$) was 3.0.

This composite membrane was attached to a gas-separating cell having a diameter of 28 cm, and air maintained under atmospheric pressure was supplied to one surface of the membrane. The other surface of the membrane was evacuated to 0.1 atmosphere with a diaphragm-type vacuum pump. Oxygen-rich air having an oxygen concentration of 41% was recovered from the pump outlet at a flow rate of 540 ml/min.

When this gas-separating operation was continuously carried out for 1 month, the oxygen concentration in the oxygen-rich air was 39% and the flow rate of the oxygen-rich air was 545 ml/min. Thus, it was confirmed that the initial separation capacity was substantially maintained.

Example 3

A dimethylformamide solution of a polysulfone resin (supplied by Union Carbide Corporation) having a solid content of 20% by weight was extrusion-laminated from a slit die on a polyester nonwoven fabric continuously travelled along a drum face, and the laminated solution was coagulated in a water bath to form a porous support. When the pore size of fine pores on the surface of the porous support was examined with a scanning electron microscope, the average pore size was found to be 0.012 μm. Desolvation was effected by water washing, the polysulfone porous support containing water in the pores thereof was continuously rolled out, and the cyclohexane solution of the silphenylene-siloxane block copolymer used in Example 2 (1.5% by weight) was continuously coated on the porous support. The coated porous support was then dried and wound.

In the so-obtained composite membrane, the thickness of the silphenylene-siloxane block copolymer was 0.12 μm.

The gas permeation rates of the composite membrane were determined according to the method described in Example 1. It was found that the oxygen gas permeability was $1.9 \cdot 10^{-9}$ $m^3/m^2 \cdot s \cdot Pa$ and the separation factor ($\rho O_2/\rho N_2$) was 3.0.

Small test pieces were cut out from this long composite membrane, and the oxygen-enriching test was carried out in the same manner as described in Example 1.

At the initial stage, oxygen-rich air having an oxygen concentration of 42% was obtained at a flow rate of 290 ml/min. After the operation was continuously carried out for 1 month, oxygen-rich air having an oxygen concentration of 35% was obtained at a flow rate of 350 ml/min.

**Claims**

1. A gas permselective membrane which comprises a porous support having fine pores continuous in the thickness direction and a 0.01 to 1 µm thick layer of a siloxan containing polymer laminated on the surface of said porous support, characterized in that said polymer comprises silarylene-siloxane structural units represented by the following general formula

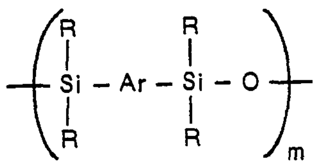

wherein R stands for an alkyl group having 1 to 10 carbon atoms, a phenyl group, a nucleus-substituted phenyl group having 6 to 20 carbon atoms, or a substituted alkyl group having 1 to 10 carbon atoms, Ar stands for

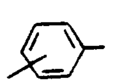 , 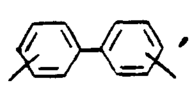 , 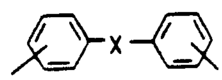 ,

in which X is —O—, —S—, —SO$_2$—,

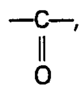

or —CH$_2$—, or

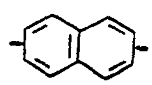

and m is a number of from 5 to 8000, and diorganosiloxane structural units represented by the following general formula

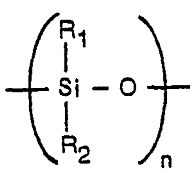

wherein $R_1$ and $R_2$ each independently stand for an alkyl group having 1 to 10 carbon atoms, a phenyl group, a nucleus-substituted phenyl group having 6 to 20 carbon atoms, a substituted alkyl group having 1 to 10 carbon atoms, a vinyl group, or an allyl group, and n is a number of from 0 to 2000, with the proviso that n/m is in the range of $0 \leqq n/m \leqq 50$, and the average pore size of said porous support is 0.001 to 1 µm.

2. A gas permselective membrane as set forth in claim 1, wherein Ar is a group

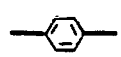

and R is a group —CH$_3$.

3. A gas permselective membrane as set forth in claim 1, wherein $R_1$ and $R_2$ stand for a group —CH$_3$.

4. A gas permselective membrane as set forth in claim 1, wherein $R_1$ is a group —CH$_3$, and $R_2$ is a group

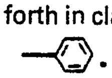.

5. A gas permselective membrane as set forth in claim 1, wherein Ar is a group

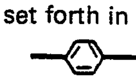,

R is a group —CH$_3$, and $R_1$ and $R_2$ stand for a group —CH$_3$.

6. A gas permselective membrane as set forth in claim 1, wherein Ar is a group

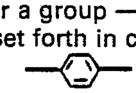,

R is a group —CH$_3$, $R_1$ is a group —CH$_3$, and $R_2$ is a group

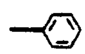.

7. A gas permselective membrane as set forth in claim 1, wherein m is a number of from 5 to 1000, n is a number of 1 to 2000, and n/m is in the range of $1/100 \leqq n/m \leqq 50$.

8. A gas permselective membrane as set forth in claim 1, wherein m is a number of from 5 to 500, n is a number of from 1 to 500, and n/m is in the range of $1/100 \leqq n/m \leqq 20$.

9. A gas permselective membrane as set forth in claim 1, wherein m is a number of from 50 to 8000, and n is a number of 0.

10. A gas permselective membrane as set forth in claim 1, wherein the porous support is composed of a polysulfone resin, a polyether sulfone resin, or cellulose acetate.

11. A gas permselective membrane as set forth in claim 1, wherein the average pore size of the porous support is 0.005 to 0.05 µm.

12. A gas permselective membrane as set forth in claim 10, wherein the average pore size of the porous support is 0.005 to 0.05 µm.

13. A gas permselective membrane as set forth in claim 1, wherein the thickness of the polymer layer is 0.05 to 0.7 µm.

14. A gas permselective membrane as set forth in claim 1, wherein the thickness of the polymerr layer is 0.1 to 0.5 µm.

**Patentansprüche**

1. Selektiv gaspermeable Membran, bestehend aus einem porösen Träger mit feinen, zusammenhängenden Poren in Richtung der Dicke und einer 0,01 bis 1 µm dicken Schicht aus einem siloxanhaltigen Polymeren, die auf die Oberfläche des porösen Trägers geschichtet ist, dadurch gekennzeichnet, daß das Polymere Silarylensiloxan-Struktureinheiten der folgenden allgemeinen Formel

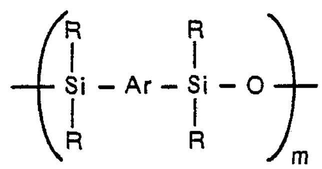

wobei R eine Alkylgruppe mit 1 bis 10 Kohlenstoffatomen, eine Phenylgruppe, eine kernsubstituierte Phenylgruppe mit 6 bis 20 Kohlenstoffatomen oder eine substituierte Alkylgruppe mit 1 bis 10 Kohlenstoffatomen, Ar eine Gruppe

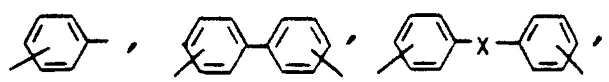

mit X = —O—, —S—, —$SO_2$—,

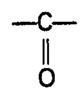

oder —$CH_2$—, oder

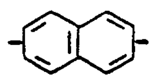

und m eine Zahl von 5 bis 8000 ist, sowie Diorganosiloxan-Struktureinheiten der allgemeinen Formel

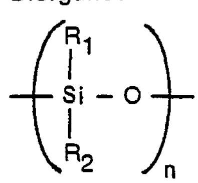

enthält, wobei $R_1$ und $R_2$ jeweils unabhängig voneinander eine Alkylgruppe mit 1 bis 10 Kohlenstoffatomen, eine Phenylgruppe, eine kernsubstituierte Phenylgruppe mit 6 bis 20 Kohlenstoffatomen, eine substituierte Alkylgruppe mit 1 bis 10 Kohlenstoffatomen, eine Vinylgruppe oder eine Allylgruppe und n eine Zahl von 0 bis 2000 ist, mit der Maßgabe, daß n/m im Bereich von $0 \leqq n/m \leqq 50$ liegt und wobei die durchschnittliche Porengröße des porösen Trägers 0,001 bis 1 µm beträgt.

2. Selektiv gaspermeable Membran nach Anspruch 1, wobei Ar die Gruppe

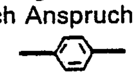

und R eine —$CH_3$-Gruppe ist.

3. Selektiv gaspermeable Membran nach Anspruch 1, wobei $R_1$ und $R_2$ eine —$CH_3$-Gruppe sind.

4. Selektiv gaspermeable Membran, wobei $R_1$ eine —$CH_3$-Gruppe und $R_2$ die Gruppe

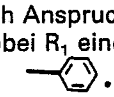.

ist.

5. Selektiv gaspermeable Membran nach Anspruch 1, wobei Ar die Gruppe

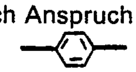

R eine —$CH_3$-Gruppe und $R_1$ und $R_2$ eine —$CH_3$-Gruppe sind.

6. Selektiv gaspermeable Membran nach Anspruch 1, wobei Ar die Gruppe

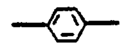

R eine —$CH_3$-Gruppe, $R_1$ eine —$CH_3$-Gruppe und $R_2$ die Gruppe

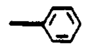

ist.

7. Selektiv gaspermeable Membran nach Anspruch 1, wobei m eine Zahl von 5 bis 1000 und n eine Zahl von 1 bis 2000 ist und n/m im Bereich von $1/100 \leqq n/m \leqq 50$ liegt.

8. Selektiv gaspermeable Membran nach Anspruch 1, wobei n eine Zahl von 5 bis 500 und n eine Zahl von 1 bis 500 ist und n/m im Bereich von $1/100 \leqq n/m \leqq 20$ liegt.

9. Selektiv gaspermeable Membran nach Anspruch 1, wobei m eine Zahl von 50 bis 8000 und n = 0 ist.

10. Selektiv gaspermeable Membran nach Anspruch 1, wobei der poröse Träger aus einem Polysulfonharz, einem Polyethersulfonharz oder Celluloseacetat zusammengesetzt ist.

11. Selektiv gaspermeable Membran nach Anspruch 1, wobei die durchschnittliche Porengröße des porösen Trägers 0,005 bis 0,05 μm beträgt.

12. Selektiv gaspermeable Membran nach Anspruch 10, wobei die durchschnittliche Porengröße des porösen Trägers 0,005 bis 0,05 μm beträgt.

13. Selektiv gaspermeable Membran nach Anspruch 1, wobei die Dicke der Polymerschicht 0,05 bis 0,7 μm beträgt.

14. Selektiv gaspermeable Membran nach Anspruch 1, wobei die Dicke der Polymerschicht 0,1 bis 0,5 μm beträgt.

**Revendications**

1. Membrane sélectivement perméable aux gaz qui comprend un support poreux ayant des pores fins continus dans la direction de l'épaisseur et une couche de 0,01 à 1 μm d'épaisseur d'un polymère contenant du siloxanne stratifiée sur la surface dudit support poreux, caractérisée en ce que ledit polymère comprend des motifs de structure silarylène-siloxanne représentés par la formule générale suivante:

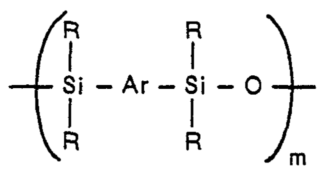

dans laquelle R représente un groupe alkyle en $C_1$—$C_{10}$, un groupe phényle, un groupe phényle substitué au noyau en $C_6$—$C_{20}$, ou un groupe alkyle en $C_1$—$C_{10}$ substitué, Ar représente

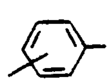 , 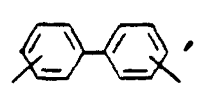 , 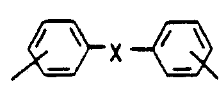 ,

dans lequel X est —O—, —S—, —$SO_2$—,

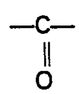

ou —$CH_2$— ou

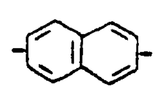

et m est un nombre de 5 à 8000, et des motifs de structure diorganosiloxanne représentés par la formule générale suivante:

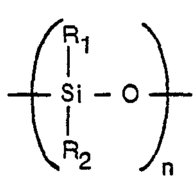

dans laquelle $R_1$ et $R_2$ représentent chacun indépendamment un groupe alkyle en $C_1$—$C_{10}$, un groupe

phényle, un groupe phényle substitué au noyau en $C_6$—$C_{20}$, un groupe alkyle en $C_1$—$C_{10}$ substitué, un groupe vinyle ou un groupe allyle, n est un nombre de 0 à 2000, avec la condition que n et m satisfassent la relation $0 \leqq n/m \leqq 50$, et la dimension moyenne de pores dudit support poreux est de 0,001 à 1 µm.

2. Membrane sélectivement perméable aux gaz selon la revendication 1, dans laquelle Ar est un groupe

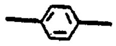

et R est un groupe —$CH_3$.

3. Membrane sélectivement perméable aux gaz selon la revendication 1, dans laquelle $R_1$ et $R_2$ représentent un groupe —$CH_3$.

4. Membrane sélectivement perméable aux gaz selon la revendication 1, dans laquelle $R_1$ est un groupe —$CH_3$ et $R_2$ est un groupe

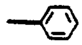 .

5. Membrane sélectivement perméable aux gaz selon la revendication 1, dans laquelle Ar est un groupe

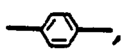,

R est un groupe —$CH_3$ et $R_1$ et $R_2$ représentent un groupe —$CH_3$.

6. Membrane sélectivement perméable aux gaz selon la revendication 1, dans laquelle Ar est un groupe

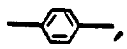,

R est un groupe —$CH_3$, $R_1$ est un groupe —$CH_3$ et $R_2$ est un groupe

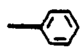.

7. Membrane sélectivement perméable aux gaz selon la revendication 1, dans laquelle m est un nombre de 5 à 1000, n est un nombre de 1 à 2000 et n/m satisfait la relation $1/100 \leqq n/m \leqq 50$.

8. Membrane sélectivement perméable aux gaz selon la revendication 1, dans laquelle m est un nombre de 5 à 500, n est un nombre de 1 à 500 et n/m satisfait la relation $1/100 \leqq n/m \leqq 20$.

9. Membrane sélectivement perméable aux gaz selon la revendication 1, dans laquelle m est un nombre de 50 à 8000 et n est égal à 0.

10. Membrane sélectivement perméable aux gaz selon la revendication 1, dans laquelle le support poreux est composé d'une résine de polysulfone, d'une résine de polyéthersulfone ou d'acétate de cellulose.

11. Membrane sélectivement perméable aux gaz selon la revendication 1, dans laquelle la dimension moyenne de pores du support poreux est de 0,005 à 0,05 µm.

12. Membrane sélectivement perméable aux gaz selon la revendication 10, dans laquelle la dimension moyenne de pores du support poreux est de 0,005 à 0,05 µm.

13. Membrane sélectivement perméable aux gaz selon la revendication 1, dans laquelle l'épaisseur de la couche de polymère est de 0,05 à 0,7 µm.

14. Membrane sélectivement perméable aux gaz selon la revendication 1, dans laquelle l'épaisseur de la couche de polymère est de 0,1 à 0,5 µm.